# EUROPEAN PATENT APPLICATION

(11) **EP 3 492 303 A1**
(43) Date of publication of application: **05.06.2019**
(21) Application number: 17204521.3
(22) Date of filing: 29.11.2017
(51) Int. Cl.: B60L 11/18, H02J 7/00, G01R 31/00, G01R 31/02

(54) **APPARATUS AND METHOD FOR PROVIDING A MEASURE OF CURRENT CAPACITY**

(71) Applicant: Vestel Elektronik Sanayi ve Ticaret A.S., 45030 Manisa (TR)
(72) Inventor: TUNAY, Erkan, 45030 Manisa (TR); YILMAZ, Samet, 45030 Manisa (TR)
(74) Representative: Whitfield, Ian

(57) **Abstract**

Apparatus and method for providing a measure of the current capacity of a charging cable (3). The apparatus comprises: a measuring device configured to provide a measure of the diameter of a charging cable (3); and a controller (9) configured to provide a measure of the current capacity of the charging cable (3) based on the measure of the diameter of the charging cable (3). The method comprises obtaining a measure of the diameter of a charging cable (3) which is connected to a battery charging apparatus (1); obtaining a measure of the current capacity of the charging cable (3) based on the measured diameter; and charging the battery in accordance with the measured current capacity of the charging cable (3).

## Description

### Technical Field

The present disclosure relates to a method and apparatus for providing a measure of the current capacity of a charging cable.

### Background

Electric and hybrid electric vehicles, such as automobiles, etc., are vehicles that are propelled by electrical energy which is typically stored in a rechargeable battery contained within the vehicle. Such batteries may be recharged by connecting the battery to a battery charging apparatus.

In a battery charging operation, the vehicle must be connected to the battery charging apparatus by use of a charging cable. For safety and efficiency purposes, the current flowing through the charging cable must be controlled to prevent overly high current flow.

### Summary

According to a first aspect disclosed herein, there is provided apparatus for providing a measure of the current capacity of a charging cable, the apparatus comprising: a measuring device configured to provide a measure of the diameter of a charging cable; and a controller configured to provide a measure of the current capacity of the charging cable based on the measure of the diameter of the charging cable.

This allows for automatic determination of the current capacity of a charging cable based on a measure of the diameter of the charging cable. The determined current capacity of the charging cable may then be used, for example, by a battery charging apparatus to safely charge a battery in an electric vehicle using the charging cable. As such, the apparatus enables safe and efficient use of a charging cable in a manner that is convenient for the user.

In an example, the measuring device comprising a clamp arrangement.

In an example, the clamp arrangement comprises: a first jaw; a second jaw, the second jaw being connected to the first jaw such that an aperture is defined between the jaws; and a biasing element arranged to urge the jaws closed, wherein the closed jaws are openable to accommodate a charging cable in the aperture.

In an example, the measuring device comprises a plurality of clamp arrangements, each clamp arrangement comprising: a first jaw; a second jaw, the second jaw being connected to the first jaw such that an aperture is defined between the jaws; and a biasing element, the biasing element arranged to urge the jaws closed, wherein the closed jaws are openable to accommodate a charging cable in the aperture, wherein the diameter of the aperture of each clamp arrangement is different.

In an example, the aperture of each claim arrangement has a circular shape when the jaws are closed.

In an example, the or each clamp arrangement comprises one or more sensors configured to detect when the jaws are closed.

In an example, the or each clamp arrangement comprises a sensor located at the distal end of the first jaw and a sensor located at the distal end of the second jaw, the sensors being configured to contact one another when the jaws are closed.

In an example, the controller is configured to provide the measure of the current capacity of the charging cable by searching a look-up table which contains data for the current capacity for one or more charging cables, the identity of the or each clamp arrangement of the measuring device, and whether jaws of the or each clamp arrangement close when each of the one or more charging cables is accommodated in the jaws.

In an example, the apparatus comprises data storage which stores the look-up table.

There may also be provided a battery charging apparatus, the battery charging apparatus comprising: measuring apparatus as described above; a socket for receiving a plug of a charging cable; and a charge delivery device for delivering a current to a received charging cable in accordance with the measured current capacity of the charging cable.

Providing a measure of the current capacity of a charging cable in this manner allows for the battery charging apparatus to safely and efficiently charge a battery of, for example, an electric vehicle. The user does not have to manually detect and input the current capacity of a connected charging cable.

In an example, the battery charging apparatus comprises a charging controller configured to control the charge delivery device to deliver a current to a received charging cable according to the current capacity of the charging cable determined by the measuring apparatus.

According to a second aspect disclosed herein, there is provided a method of recharging a battery, the method comprising: obtaining a measure of the diameter of a charging cable which is connected to a battery charging apparatus; obtaining a measure of the current capacity of the charging cable based on the measured diameter; and charging the battery in accordance with the measured current capacity of the charging cable.

In an example, the measure of the diameter of the charging cable is obtained by using a clamp arrangement.

In an example, the measure of the diameter of the charging cable is obtained by using plurality of a clamp arrangements.

In an example, the measure of the current capacity of the charging cable is obtained by searching a look-up table which contains data for the current capacity for one or more charging cables, the identity of the or each clamp arrangement of the measuring device, and whether jaws of the or each clamp arrangement close when each of the one or more charging cables is accommodated in the jaws.

### Brief Description of the Drawings

To assist understanding of the present disclosure and to show how embodiments may be put into effect, reference is made by way of example to the accompanying drawings in which:
Figure 1 shows schematically an example of battery charging apparatus connected to an electric vehicle by a charging cable;
Figure 2 shows schematically a front view of an example of a measuring device of the battery charging apparatus shown in Figure 1, the jaws of the measuring device being closed;
Figure 3 shows schematically a front view of an example of a measuring device of the battery charging apparatus shown in Figure 1, the jaws of the measuring device being open;
Figure 4 shows schematically a front view of an example of a measuring device of the battery charging apparatus shown in Figure 1, the jaws of the measuring device being closed around a charging cable; and
Figure 5 shows schematically a front view of an example of a measuring device of the battery charging apparatus shown in Figure 1, the jaws of the measuring device being partially closed around a charging cable.

### Detailed Description

Electric and hybrid electric vehicles, such as automobiles, etc., include a rechargeable battery for storing electrical energy to be used for propulsion. The battery may be recharged by connecting it to a battery charging apparatus. To recharge the battery, the vehicle must be connected to the battery charging apparatus by use of a charging cable. For safety and efficiency purposes, the current flowing through the charging cable must be controlled to prevent overly high current flow.

Different batteries have different charging current capacities, that is, the permitted or recommended or "safe" level of charging current that can be used to charge the battery. For example, typical battery charging current capacities are 13A, 20A, 32A and 63A. In turn, different charging cables exist, which are compatible with the different batteries. Each different type of charging cable has a different maximum current flow through the cable that is regarded as safe. It is therefore important that a battery charging apparatus can determine the type of charging cable that has been connected to it before beginning to charge the connected battery of the vehicle so that it knows the maximum safe current flow (i.e. the current capacity). If a battery charging apparatus cannot identify the type of charging cable that has been connected then it cannot use the charging cable to charge the battery of the connected vehicle. In this situation, the battery charging apparatus shuts down, which is very frustrating for a user.

A user can manually identify the type of charging cable that they have connected to the battery charging apparatus and input this information into the battery charging apparatus. However, some users may find this difficult. In addition, user identification of the type of charging cable may result in an error and if the wrong type of charging cable is identified then there is a risk of serious injury because the battery charging apparatus may attempt to send a current through a charging cable that is too high for the charging cable to handle.

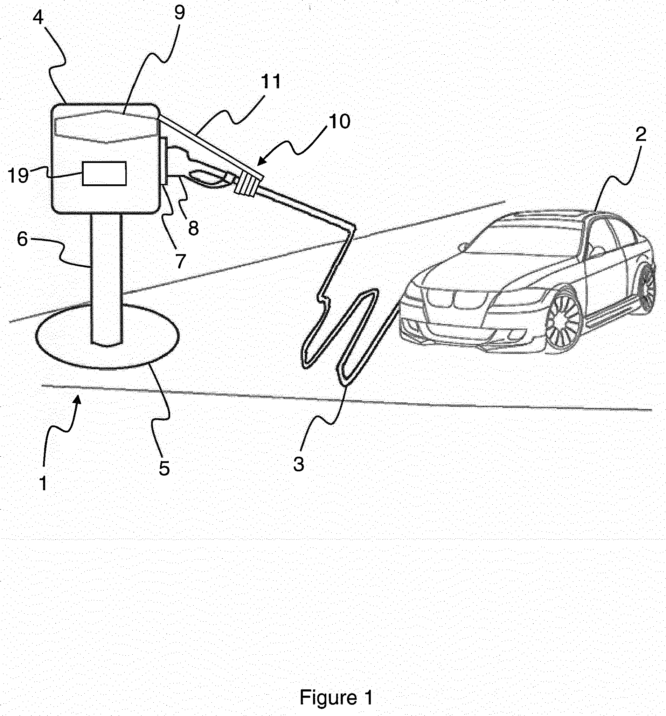

Referring now to Figure 1, there is shown an example of a battery charging apparatus 1 connected to an electric vehicle 2 by a charging cable 3.

The electric vehicle 2 includes a rechargeable battery (not shown) for supplying electrical energy to propel the vehicle. The vehicle may be any type of vehicle that is capable of being propelled at least temporarily by electrical energy stored in a rechargeable battery, including for example a hybrid electric vehicle.

The battery charging apparatus 1 has a housing 4 elevated above a base plate 5 by a rigid support 6. The battery charging apparatus 1 also has a socket 7 arranged to receive a corresponding plug (not shown) of the charging cable 3 so as to connect the charging cable 3 to the battery charging apparatus 1.

The socket 7 is connected to a source of electricity, such as mains electricity, by a connector (not shown). A charge delivery device (not shown) is provided for delivering a current to the charging cable 3 when it is connected to the battery charging apparatus 1, in a process that is described below.

The charging cable 3 is typically a length of copper wire or wires encased in a sheath. The charging cable 3 has a first plug (not shown) at a first end. The first plug is arranged to cooperate and mate with the socket 7. The charging cable 3 also has a second plug (not shown) at an opposite end to the first plug. The second plug is arranged to cooperate and mate with a socket (not shown) provided on the electric vehicle 2 so that the battery charging apparatus 1 is connectable to the electric vehicle 2. The charging cable 3 also includes a handle 8 to assist a user in inserting the first plug into the socket 7.

A main controller 9, which may be a processor or the like, is provided within the housing 4 of the battery charging apparatus 1 for controlling the operation of the battery charging apparatus 1. For example, the main controller 9 controls measurement of the current capacity of a charging cable connected to the battery charging apparatus 1. The main controller 9 is connected to data storage provided in the housing 4 and which will be discussed further below.

The battery charging apparatus 1 also includes a measuring apparatus for providing a measure of the current capacity of a charging cable connected to the battery charging apparatus 1. The measuring apparatus has a measuring device that can provide a measure of the diameter of the charging cable 3. In this example, the measuring device includes a plurality of clamp arrangements 10 that are connected to the battery charging apparatus 1 by a support 11. In another example, the measuring device may include a single clamp arrangement 10. In other examples, other measuring devices may be used to measure the diameter of the charging cable 3. Nevertheless, having a plurality of clamp arrangements 10 as discussed further below has particular advantages, as will become clear.

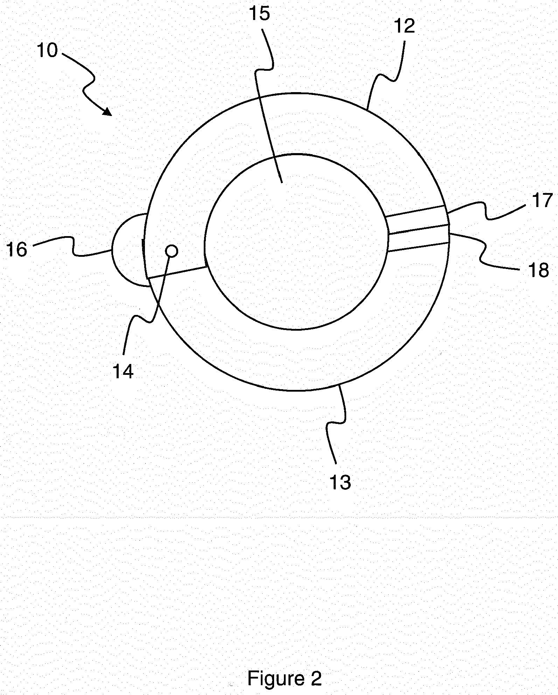

Referring now to Figures 2 to 5, a clamp arrangement 10 includes a first jaw 12 and a second jaw 13. In this example, each of the first jaw 12 and the second jaw 13 has a semi-circular shape. In other examples the jaws 12, 13 have different shapes from each other and also may define an apertures having different shape. The first jaw 12 is connected to the second jaw 13 by a connector 14. In this example, the first jaw 12 and the second jaw 13 are connected to one another such that the first jaw 12 and the second jaw 13 are both pivotable about the connector 14. The arrangement of the first jaw 12 and the second jaw 13 when connected together is such that an aperture 15 is defined in between the jaws. In this example, the aperture 15 has a circular profile when the jaws 12, 13 are closed.

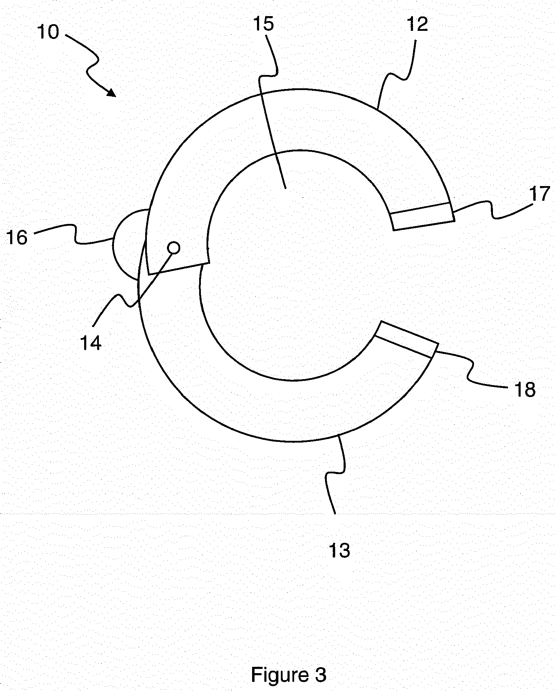

The clamp arrangement 10 includes a biasing element 16. In this example, the biasing element 16 is a coil spring. In other examples, the biasing element 16 may be another type of biasing element 16, such as a different type of spring. The biasing element 16 is connected to at least one of the jaws 12, 13. In this example, the biasing element 16 is connected to both the first jaw 12 and the second jaw 13. In any event, the arrangement of the biasing element 16 and the first and second jaws 12, 13 is such that the biasing element 16 urges the jaws 12, 13 closed towards a closed position (as is shown in Figure 2). When the jaws 12, 13 are closed, the distal ends of the jaws 12, 13 (the ends of the jaws 12, 13 that are furthest away from the connector 14) touch one another. The jaws 12, 13 are openable into an open position (as is shown in Figure 3) by acting against the biasing force of the biasing element 16. In the open position, the distal ends of the jaws 12, 13 are spaced away from one another by a gap. Opening the jaws 12, 13 allows for a charging cable 3 to be inserted into the aperture 15. A user may for example open the jaws 12, 13 manually to insert a charging cable 3 into the aperture 15. In another example, the clamp arrangement 10 may include a driving element that is operable to act against the biasing force of the biasing element 16 to open the jaws 12, 13.

The clamp arrangement 10 is arranged to detect when the jaws 12, 13 are closed. In this example, the first jaw 12 has a first conductive end portion 17 located at the distal end of the first jaw 12, and the second jaw 13 has a second conductive end portion 18 located at the distal end of the second jaw 13. That is, the distal end portions 17, 18 are formed from a material that is a good conductor of electricity. In another example, the whole of the first jaw 12 and the second jaw 13 is formed from a material that is a good conductor of electricity. A voltage runs across the jaws 12, 13 so that when the distal end of the first jaw 12 touches the distal end of the second jaw 13 (i.e. when the jaws 12, 13 are closed), a detector (not shown) senses a voltage. The sensing of the voltage is detectable by the main controller 9, as will be described. When the jaws 12, 13 remain open, no voltage is sensed. In another example, a sensor may be located at a distal end of each jaw 12, 13 for detecting when the jaws 12, 13 are closed. In an example, each sensor may be a proximity sensor. In another example, each sensor may be another type of sensor that can detect contact with another body, such as a pressure sensor.

For clarity, Figures 2 to 5 only show one clamp arrangement 10. However, the example of the measuring device shown in Figure 1 has a plurality of clamp arrangements 10 arranged in series such that their apertures 15 are in axial alignment. In this particular example, the measuring device includes three clamp arrangements 10. Three clamp arrangements 10 can be used to detect four different diameters of charging cable 3. The pairs of jaws 12, 13 of each clamp arrangement 10 in the series are sized differently from one another such that the clamp arrangements 10 have apertures 15 having different diameters. The diameter of each aperture 15 corresponds to a diameter of a particular charging cable 3, which is known because only four specific diameters of charging cable 3 are typically used, each of which corresponds to one of the four typical current capacities of 13A, 20A, 32A and 63A. In this example, the clamp arrangements 10 are arranged in order of the size of the diameter of their apertures 15. In this specific example, the clamp arrangement 10 with the largest aperture diameter is located closest to the battery charging apparatus 1 and the clamp arrangement 10 with the smallest diameter is located furthest away from the battery charging apparatus 1. Other orderings are possible.

The main controller 9 is configured to provide a measure of the current capacity of the charging cable 3 based on the measure of the diameter of the charging cable 3 provided by the measuring device.

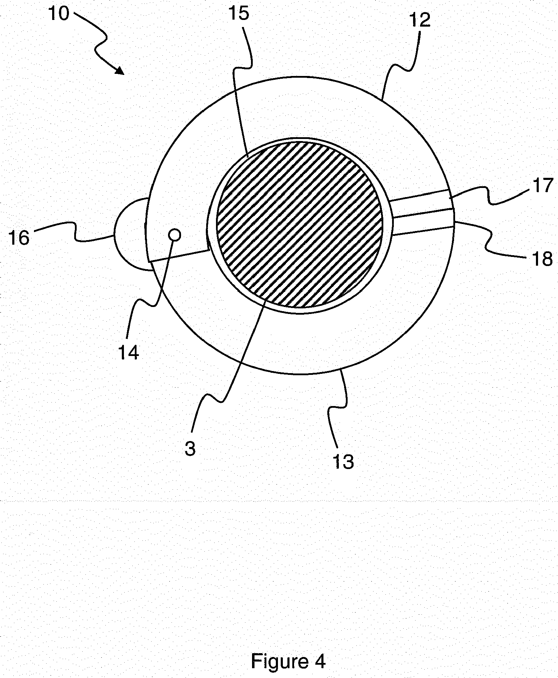

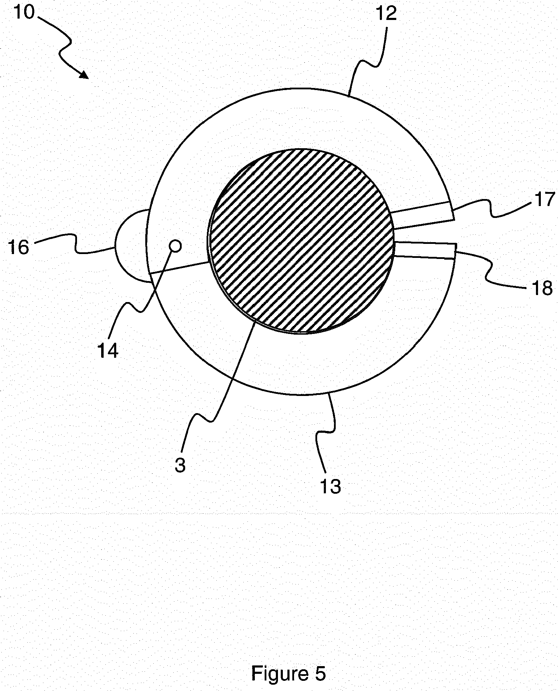

The measuring device obtains a measure of the diameter of the charging cable 3 by determining whether the jaws 12, 13 of the plural clamp arrangements 10 are respectively closed (see Figure 4) or open (see Figure 5) whilst the charging cable 3 is accommodated within the aperture 15 of each clamp arrangement 10, based on whether the conductive end portions 17, 18 (or sensors) have contacted one another. If the conductive end portions 17, 18 (or sensors) of a clamp arrangement 10 detect that its jaws 12, 13 are closed whilst a charging cable 3 is accommodated in its aperture 15, the main controller 9 determines that the inserted charging cable 3 has a diameter that is less than or equal to the diameter of the aperture 15, which is known to the main controller 9. If the conductive end portions 17, 18 (or sensors) of a clamp arrangement 10 detect that its jaws 12, 13 remain open whilst a charging cable 3 is accommodated in its aperture 15, the main controller 9 determines that the inserted charging cable 3 has a diameter that is greater than the diameter of the aperture 15. Based on this information, the main controller 9 can determine which of the four known charging cables 3 (13A, 20A, 32A and 63A) is accommodated in the apertures 15 of the clamp arrangements 10. This process is described further below.

A charging controller 19 is also provided in the battery charging apparatus 1. The charging controller 19 is configured to control the charge delivery device to deliver a current to the charging cable 3 according to the current capacity of the charging cable 3 determined by the main controller 9.

An example of use of the battery charging apparatus 1 shown in Figure 1 will now be described with reference to the clamp arrangement 10 shown in Figures 2 to 5.

When a user wishes to recharge the battery of the electric vehicle 2, the user drives the vehicle 2 to the battery charging apparatus 1 and removes the charging cable 3 from the vehicle 2. The user then opens the jaws 12, 13 of each of the three clamp arrangements 10, inserts the charging cable 3 into the aperture 15 of each clamp arrangement 10, and then releases the jaws 12, 13 so that the biasing element 16 urges the jaws 12, 13 towards the charging cable 3 that is now accommodated in the apertures 15. The user then connects the first plug of the charging cable 3 to the socket 7 of the battery charging apparatus 1.

The user then activates the battery charging apparatus 1 by, for example, actuating a "start" button provided on the battery charging apparatus 1 or by swiping a payment card on a suitable payment card sensor provided on the battery charging apparatus 1. In other embodiments, the battery charging apparatus 1 activates automatically when the charging cable 3 is connected to the socket 7.

When the battery charging apparatus 1 has been activated, for safety and efficiency purposes as discussed above, the current capacity of the charging cable 3 is determined before a charging operation can begin.

In order to provide a measure of the current capacity of the charging cable 3, the main controller 9 first obtains a measure of the diameter of the charging cable 3. To this end, the main controller 9 determines which of the clamp arrangements 10 have fully closed jaws 12, 13 and which of the clamp arrangements 10 have jaws 12, 13 that remain open. If a charging cable 3 has a diameter that is smaller than the diameter of the aperture 15 of a clamp arrangement then the main controller 9 will detect that the first conductive end portion 17 of the clamp arrangement 10 has contacted with the second conductive end portion 18 of the same clamp arrangement 10 and will consequently determine that the jaws 12, 13 of the clamp arrangement 10 have closed (as is shown in Figure 4). However, if the diameter of the charging cable 3 is larger than the diameter of the aperture 15 of a clamp arrangement 10 then the main controller 9 will detect that the first conductive end portion 17 of a clamp arrangement 10 does not contact with the second conductive end portion 18 of the same clamp arrangement 10 and will consequently determine that the jaws 12, 13 of the clamp arrangement 10 are open (as is shown in Figure 5). In this example, since the first and second conductive end portions 17, 18 are both formed from a material that is highly conductive, the main controller 9 can conveniently determine whether the jaws 12, 13 have closed by taking a voltage reading to detect whether an electrical circuit has been completed by the conductive end portions 17, 18 contacting one another.

In this example, the measuring device includes three clamp arrangements 10. The diameter of the aperture 15 of the first clamp arrangement is 3mm, which corresponds to the thickness of a charging cable 3 having a 13A current capacity, which is 2.8mm. The diameter of the aperture 15 of the second clamp arrangement is 3.5mm, which corresponds to the thickness of a charging cable 3 having a 20A current capacity, which is 3.3mm. The diameter of the aperture 15 of the third clamp arrangement is 4.5mm, which corresponds to the thickness of a charging cable 3 having a 32A current capacity, which is 4.3mm. The diameter of a charging cable 3 having a 63A capacity is 7.2mm.

The main controller 9 then determines a measure of the current capacity of the charging cable 3 by searching in look-up data contained in a look-up table stored in its data storage. The look-up data contains data on current capacity for a plurality of charging cables 3, the identity of each clamp arrangement 10 of the measuring device, and whether the jaws 12, 13 of each clamp arrangement close when each of the plurality of charging cables 3 is accommodated in the jaws 12, 13. The main controller 9 is configured to search for a state that corresponds with the current state of which clamp arrangements 10 have closed jaws 12, 13 and which have open jaws 12, 13 when the charging cable 3 is accommodated in the jaws 12, 13. The main controller 9 then retrieves the corresponding current capacity of the charging cable 3.

Table 1 shows an example of look-up data contained in a look-up table stored in the data storage of the main controller 9. In Table 1, a "0" indicates a case in which the jaws 12, 13 of a clamp arrangement 10 remain open, and a "1" indicates a case in which the jaws 12, 13 of a clamp arrangement 10 have closed.

**Table 1**

| | 13A Charging Cable | 20A Charging Cable | 32A Charging Cable | 63A Charging Cable |
|---|---|---|---|---|
| First Clamp Arrangement | 1 | 0 | 0 | 0 |
| Second Clamp Arrangement | 1 | 1 | 0 | 0 |
| Third Clamp Arrangement | 1 | 1 | 1 | 0 |

Therefore, in this example, if all three clamp arrangements close around the charging cable 3 accommodated in their apertures 15, the main controller 9 determines that the charging cable 3 has a diameter that is narrower than the diameter of the narrowest aperture 15, which is the 3mm aperture of the first clamp arrangement 10. The main controller 9 therefore determines that the charging cable 3 has a current capacity of 13A.

If the first clamp arrangement remains open but the second and third clamp arrangements close around the charging cable 3, the main controller 9 determines that the charging cable 3 has a diameter that is larger than the narrowest aperture of the first clamp arrangement, which is 3mm, but smaller than the apertures 15 of the second and third clamp arrangements 10, which are 3.5mm and 4.5mm, respectively. The main controller 9 therefore determines that the charging cable 3 has a current capacity of 20A.

If the first and second clamp arrangements remain open but the third clamp arrangement closes around the charging cable 3, the main controller 9 determines that the charging cable 3 has a diameter that is larger than the apertures 15 of the first and second clamp arrangements, which are 3mm and 3.5mm respectively, but smaller than the aperture 15 of the third clamp arrangement 10, which is 4.5mm. The main controller 9 therefore determines that the charging cable 3 has a current capacity of 32A.

If the first, second and third clamp arrangements all remain open, the main controller 9 determines that the charging cable 3 has a diameter that is larger than the apertures 15 of the first, second and third clamp arrangements, which are 3mm, 3.5mm, 4.5mm respectively. The main controller 9 therefore determines that the charging cable 3 has a current capacity of 63A (as this is a broad charging cable 3).

Once the main controller 9 has obtained a measure of the current capacity of the charging cable 3, the battery charging apparatus 1 prompts the user to connect the second plug of the charging cable 3 to the corresponding socket provided on the electric vehicle 9. The user may be prompted by, for example, a visual or audible indicator.

When the second plug of the charging cable 3 has been connected to the corresponding socket of the electric vehicle 2, the main controller 9 sends the obtained measure of the current capacity of the charging cable 3 to a corresponding controller in the electric vehicle 2. The charging controller 19 then instructs the charge delivery device to deliver a current to the charging cable 3 according to the determined current capacity of the charging cable 3. The battery system of the electric vehicle 2 then begins to be recharged.

An advantage of this arrangement is that it allows for a user to easily and safely recharge the battery of an electric vehicle using a charging cable. The particular charging cable that has been connected to the battery charging apparatus by a user can be automatically identified by the main controller. Therefore the user is not forced to identify the current capacity of the charging cable and input this information manually into the battery charging apparatus. This makes the charging of a battery more convenient and, importantly, lowers the above mentioned risk of injury because the chance of user error during the battery charging operation is mitigated.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for providing a measure of the current capacity of a charging cable, the apparatus comprising:
a measuring device configured to provide a measure of the diameter of a charging cable; and
a controller configured to provide a measure of the current capacity of the charging cable based on the measure of the diameter of the charging cable.

2. Apparatus according to claim 1, the measuring device comprising a clamp arrangement.

3. Apparatus according to claim 2, the clamp arrangement comprising:
a first jaw;
a second jaw, the second jaw being connected to the first jaw such that an aperture is defined between the jaws; and
a biasing element arranged to urge the jaws closed, wherein the closed jaws are openable to accommodate a charging cable in the aperture.

4. Apparatus according to claim 3, the measuring device comprising a plurality of clamp arrangements, each clamp arrangement comprising:
a first jaw;
a second jaw, the second jaw being connected to the first jaw such that an aperture is defined between the jaws; and
a biasing element arranged to urge the jaws closed, wherein the closed jaws are openable to accommodate a charging cable in the aperture,
wherein the diameter of the aperture of each clamp arrangement is different.

5. Apparatus according to claim 3 or claim 4, wherein the aperture of each claim arrangement has a circular shape when the jaws are closed.

6. Apparatus according to any of claims 3 to 5, the or each clamp arrangement comprising one or more sensors configured to detect when the jaws are closed.

7. Apparatus according to claim 6, wherein the or each clamp arrangement comprises a sensor located at the distal end of the first jaw and a sensor located at the distal end of the second jaw, the sensors being configured to contact one another when the jaws are closed.

8. Apparatus according to any of claims 3 to 7, wherein the controller is configured to provide the measure of the current capacity of the charging cable by searching a look-up table which contains data for the current capacity for one or more charging cables, the identity of the or each clamp arrangement of the measuring device, and whether jaws of the or each clamp arrangement close when each of the one or more charging cables is accommodated in the jaws.

9. Apparatus according to claim 8, comprising data storage which stores the look-up table.

10. A battery charging apparatus, the battery charging apparatus comprising:
measuring apparatus according to any one of claims 1 to 9;
a socket for receiving a plug of a charging cable; and
a charge delivery device for delivering a current to a received charging cable in accordance with the measured current capacity of the charging cable.

11. A battery charging apparatus according to claim 10, comprising a charging controller configured to control the charge delivery device to deliver a current to a received charging cable according to the current capacity of the charging cable determined by the measuring apparatus.

12. A method of recharging a battery, the method comprising:
obtaining a measure of the diameter of a charging cable which is connected to a battery charging apparatus;
obtaining a measure of the current capacity of the charging cable based on the measured diameter; and
charging the battery in accordance with the measured current capacity of the charging cable.

13. A method of recharging a battery according to claim 12, wherein the measure of the diameter of the charging cable is obtained by using a clamp arrangement.

14. A method of recharging a battery according to claim 13, wherein the measure of the diameter of the charging cable is obtained by using plurality of a clamp arrangements.

15. A method of recharging a battery according to claim 13 or claim 14, wherein the measure of the current capacity of the charging cable is obtained by searching a look-up table which contains data for the current capacity for one or more charging cables, the identity of the or each clamp arrangement of the measuring device, and whether jaws of the or each clamp arrangement close when each of the one or more charging cables is accommodated in the jaws.
